# EUROPEAN PATENT SPECIFICATION

(11) **EP 2 081 475 B1**
(45) Date of publication and mention of the grant of the patent: **03.03.2010**
(21) Application number: 07819451.1
(22) Date of filing: 30.10.2007
(51) Int. Cl.: A47J 27/21, B01D 35/143

(54) **JUG FOR FILTERING LIQUIDS**
KRUG ZUM FILTERN VON FLÜSSIGKEITEN
CARAFE POUR FILTRER DES LIQUIDES

(30) Priority: 15.11.2006 IT PD20060425
(43) Date of publication of application: 29.07.2009
(73) Proprietor: Laica S.p.a., 36021 Barbarano Vicentino (IT)
(72) Inventor: MORETTO, Maurizio, 36100 Vicenza (IT)
(74) Representative: Cantaluppi, Stefano
(86) International application number: PCT/EP2007/009412
(87) International publication number: WO 2008/058632

(56) References cited:
- EP-A- 0 891 952
- WO-A-00/66245
- WO-A-03/028848
- WO-A-2005/097293
- DE-B3-102004 014 646

## Description

### Technical field

The subject of the invention is a jug for filtering liquids of the type including the characteristics mentioned in the preamble of the main claim.

Such a filtering jug is described in the patent DE 10 2004 014 646 B3.

Preferably, the invention refers to a water filtering jug with replaceable filter cartridge; in such jugs the filtering capacity of the cartridges is subject to exhaustion, and therefore the cartridges must be replaced after a certain number of filtering cycles and/or after a predetermined period of activity of the cartridge.

### Technological background

In this field it is known to use jugs provided with a counting device, typically installed on the lid, to indicate the number of filtering cycles carried out since the cartridge was last replaced, in order to determine its remaining life.

European Patent Application EP 0 891 952 A1 and International Patent Applications WO 00/66 245, WO 03/028 848, WO 2005/097 293 disclose such known counting devices.

The number indicated by the device is increased each time the user opens a closure member arranged on the jug, typically constituted by the entire lid or by a part thereof, this operation being prior to the introduction of the water into the jug.

A principal drawback of this solution lies in the fact that the counting device, in order to be actuated, requires an operation carried out manually by the user, involving the need to use both hands for the operation, one to hold the jug and the other to open the closure member. In addition, there is the possibility that the jug may also be opened accidentally or fortuitously, without this being followed by its filling and therefore the completion of a filtering cycle. This involves on the one hand a major inconvenience for the user, who must use both hands for filling up the jug, and on the other hand a substantial uncertainty as to whether the cartridge is still "good", with consequent uncertainty as to whether it is time to replace it.

### Description of the invention

The problem underlying the present invention is that of providing a jug structurally and functionally designed so as to be devoid of all the drawbacks mentioned with reference to the prior art cited.

This problem is solved by a filter jug produced according to the claims which follow.

### Brief description of the drawings

The characteristics and advantages of the invention will become clearer from the detailed description of some exemplary embodiments thereof, illustrated by way of non-limiting example with reference to the appended drawings, in which:
- Figures 1 and 2 are two diagrammatic sectional views of a detail of a jug produced according to a first exemplary embodiment of the present invention;
- Figures 3 and 4 are two diagrammatic sectional views of an alternative embodiment of the detail of Figure 1.

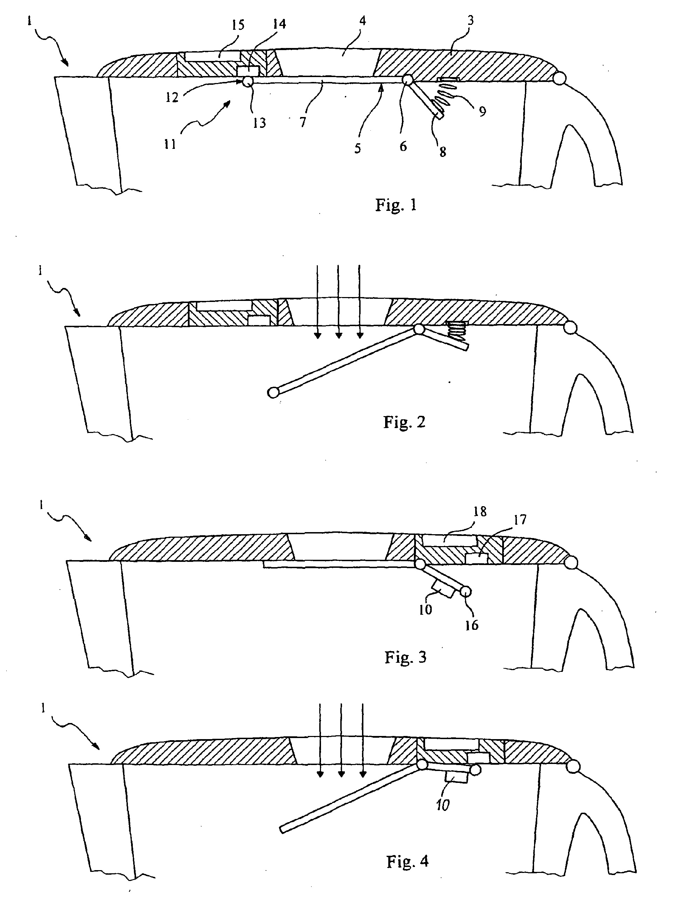

In Figures 1 to 4, the reference 1 indicates as a whole a jug for filtering and delivering drinking water. The jug 1 is of the type (known per se) with replaceable filter cartridge.

### Preferred embodiment of the invention

The jug comprises a lid 3, on which a through-aperture 4 is provided for the introduction of the water to be filtered.

On the lid 3, at the aperture 4, a blocking mechanism 5 is mounted so as to pivot between a first, closed position in which it closes the aperture 4, as shown in Figures 1 and 3, and a second, open position, as shown in Figures 2 and 4.

The blocking mechanism 5 is secured to the lid 3 by means of a hinge 6 and comprises, on opposite sides of the axis of the hinge 6, a small blocking plate 7, capable of being moved close to the lid 3 so as to close the aperture 4, and an arm 8 inclined with respect to the plate 7, such that, in the second, open position of the blocking mechanism 5 the plate is brought close to the lid 3.

The lid 3 comprises actuating means associated with said blocking mechanism 5 to urge it towards the first, closed position, and such as to allow it to pass into the second, open position under the action of the flow of liquid admitted into the jug through the aperture 4.

In the exemplary embodiment of Figures 1 and 2, the actuating means comprise a helical spring 9, the opposed ends of which are secured, respectively, to the arm 8 and to the lid 3.

In the constructional variant shown in Figures 3 and 4, the actuating means comprise a counterweight 10, situated on the arm 8.

The lid 3 comprises a counting device 11 for counting the cycles of opening and closure of the blocking mechanism 5 in order to determine, on the basis of the number of fillings of the jug with water to be filtered, the remaining useful life of the filter cartridge.

The counting device 11 comprises a sensor 12 capable of detecting the passage of the blocking plate 7 from the closed position on the aperture 4 to the open position, or vice versa.

In the exemplary embodiment of Figures 1 and 2, the sensor 12 is of the proximity detection type, with a magnet 13, fixed on the opposite end of the plate 7 from the hinge 6, and a magnetic detector 14 fixed in a corresponding position on the lid 3. The magnet 13 and the magnetic detector 14 are close together when the mechanical blocking means 5 is in the first, closed position. Alternatively, provision is made for the sensor to be of the type with electrical contacts 13, 14, such that the relevant circuit is closed when the contacts are bearing on each other and is open when they are distanced from each other. As a further alternative, the sensor 12 may be of the capacitive type, or with immersed electrodes between which the circuit is closed when the level of the water to be filtered admitted into the jug submerges the electrodes by reaching or exceeding a predetermined level, or of the resistance type or some other type known *per se,* provided that it is suitable for detecting the complete filling of the reservoir for receiving the water to be filtered, in order, as a result, to increase the count of the useful life of the filter cartridge.

The counting device 11 comprises, on the lid 3, a display means 15 for the count made, electrically connected to the sensor 12.

As shown in Figure 2, the passage of the flow of water going into the jug 1 through the aperture 4 effects the pivoting of the blocking device 5 from the first, closed position to the second, open position. The relative distance between the magnet 13 and the detecting magnet 14 actuates the counting device 11, increasing (or decreasing) by one unit the number indicated by the display means 15.

The interruption of the passage of the flow of water results in the return of the blocking mechanism 5 from the open position to the closed position by the action of the return effected by the helical spring 9 or by the counterweight 10.

With reference to the example of Figures 3 and 4, the sensor 12 comprises a magnet 16, fixed on the opposite end of the arm 8 from the hinge 6, and a magnetic detector 17 fixed in a corresponding position on the lid 3. The magnet 13 and the magnetic detector 14 are close together when the mechanical blocking means 5 is in the open position.

The counting device 11 comprises, on the lid 3, a display means 18 for the count made, electrically connected to the magnetic detector 17.

In a constructional variant of the invention (not shown) the magnetic detector 17 is situated on the arm 8, while the magnet 16 is situated on the lid 3, in a corresponding position.

As shown in Figure 4, the passage of the flow of water going into the jug 1 through the aperture 4 effects the pivoting of the blocking device 5 from the first, closed position to the second, open position. The relative proximity of the magnet 16 to the magnetic detector 17, in the closed position, actuates the counting device 11, increasing by one unit the number indicated by the display means 18.

The interruption of the passage of the flow of water results in the passage of the blocking mechanism 5 from the open position to the closed position by the effect of the return action of the counterweight 10.

The invention thus solves the problem posed, obtaining the advantage of counting the filtering cycles, in order to determine the exhaustion of the cartridge, automatically, by the action of the water introduced into the jug, without requiring any manual intervention by the user other than that of placing the jug beneath the open tap.

## Claims

1. A jug (1) for filtering liquids, comprising:
- a lid (3),
- an aperture (4) provided through said lid (3) for the filling of the jug (1),
- a blocking mechanism (5) mounted on the lid (3) at the aperture (4) and displaceable between a first position, in which it closes said aperture, and a second, open position,
- actuating means associated with said blocking mechanism (5) for urging it into said first position and such as to allow its passage into the second position under the action of the flow of liquid admitted into the jug (1) through the aperture (4),
**characterized in that** it comprises, on said lid (3), a counting device (11) for counting the cycles of opening and/or closure of said blocking means (5) resulting from the admission of liquid into said jug (1).

2. A jug (1) according to claim 1, wherein said blocking means (5) is mounted on said lid (3) so as to pivot between said positions.

3. A jug (1) according to claim 1 or 2, wherein said counting device (11) comprises a sensor (12) capable of detecting the passage of said lid (3) from, or to, said first or second position.

4. A jug (1) according to claim 3, wherein the sensor (12) is a proximity sensor.

5. A jug (1) according to claim 3, wherein the sensor (12) is a sensor with contacts, or with a resistance or of the capacitive type.

6. A jug (1) according to claim 3, wherein the sensor (12) comprises a first member (13, 16) fixed on one or the other of said lid (3) and said blocking means (5) and a second member (14, 17) fixed in a corresponding position on the respective other of said lid (3) and said blocking means (5).

7. A jug (1) according to one or more of claims 1 to 6, wherein the counting device (11) is associated with a display means (15) for the count made.

8. A jug (1) according to any one of claims 1 to 7, including a filter cartridge that is replaceable when exhausted, and wherein the counting device (11) is arranged to signal the exhaustion of the cartridge in dependence on the cycles of filling of said jug (1) through said aperture (4).

## Patentansprüche

1. Krug (1) zum Filtern von Flüssigkeiten, umfassend:
- einen Deckel (3),
- eine Öffnung (4), die durch den Deckel (3) ausgebildet ist, um den Krug (1) zu füllen,
- eine Blockiereinrichtung (5), die auf dem Deckel (3) an der Öffnung (4) befestigt ist und zwischen einer ersten Position, in der sie die Öffnung schließt, und einer zweiten, offenen Position verschiebbar ist,
- eine Betätigungseinrichtung, die mit der Blockiereinrichtung (5) verbunden ist, um diese in die erste Position zu zwingen und um durch die Wirkung des Durchflusses von Flüssigkeit, das durch die Öffnung (4) in den Krug (1) eingefüllt wird, deren Übergang in die zweite Position zu ermöglichen,
**dadurch gekennzeichnet, dass** er auf dem Deckel (3) eine Zählvorrichtung (11) zum Zählen der Öffnungs- und/oder Schließzyklen der Blockiereinrichtung (5), die aus dem Einfüllen von Flüssigkeit in den Krug (1) resultieren, umfasst.

2. Krug (1) nach Anspruch 1, wobei die Blockiereinrichtung (5) auf dem Deckel (3) befestigt ist, um zwischen den Positionen zu schwenken.

3. Krug (1) nach Anspruch 1 oder 2, wobei die Zählvorrichtung (11) einen Sensor (12) umfasst, der den Übergang des Deckels (3) von der ersten oder zweiten Position oder in die erste oder zweite Position erfassen kann.

4. Krug (1) nach Anspruch 3, wobei der Sensor (12) ein Annäherungssensor ist.

5. Krug (1) nach Anspruch 3, wobei der Sensor (12) ein Sensor mit Kontakten oder mit einem Widerstand oder vom Kondensatortyp ist.

6. Krug nach Anspruch 3, wobei der Sensor (12) ein erstes Element (13, 16), das auf dem Deckel (3) oder der Blockiereinrichtung (5) befestigt ist, und ein zweites Element (14, 17), das in einer entsprechenden Position auf dem jeweils anderen Teil, Deckel (3) oder Blockiereinrichtung (5) befestigt ist, umfasst.

7. Krug (1) nach einem oder mehreren der Ansprüche 1 bis 6, wobei die Zählvorrichtung (11) mit einer Anzeigevorrichtung (15) für die durchgeführte Zählung verbunden ist.

8. Krug (1) nach einem der Ansprüche 1 bis 7, umfassend eine Filterkartusche, die austauschbar ist, wenn sie verbraucht ist, und wobei die Zählvorrichtung (11) angeordnet ist, um das Verbrauchtsein der Kartusche in Abhängigkeit von den Füllzyklen des Krugs (1) durch die Öffnung (4) zu signalisieren.

## Revendications

1. Pot (1) pour filtrer des liquides, comprenant:
- un couvercle (3),
- une ouverture (4) prévue dans ledit couvercle (3) pour le remplissage du pot (1),
- un mécanisme de blocage (5) monté sur le couvercle (3) au niveau de l'ouverture (4) et déplaçable entre une première position, dans laquelle il ferme ladite ouverture, et une seconde position, ouverte,
- un moyen d'actionnement associé avec ledit mécanisme de blocage (5) pour le pousser dans ladite première position et de manière à permettre son passage la seconde position sous l'action du courant de liquide admis le pot (1) par l'ouverture (4),
**caractérisé en ce qu'**il comprend, sur ledit couvercle (3), un dispositif de comptage (11) pour compter les cycles d'ouverture et/ou fermeture dudit moyen de blocage (5) résultant de l'admission de liquide dans ledit pot (1).

2. Pot (1) selon la revendication 1 où ledit moyen de blocage (5) est monté sur ledit couvercle (3) de manière à pivoter entre lesdites positions.

3. Pot (1) selon la revendication 1 ou 2 où ledit dispositif de comptage (11) comprend un détecteur (12) capable de détecter le passage dudit couvercle (3) de, ou dans, ladite première ou seconde position.

4. Pot (1) selon la revendication 3 où le détecteur (12) est un détecteur de proximité.

5. Pot (1) selon la revendication 3 où le détecteur (12) est un détecteur avec des contacts, u avec une résistance ou du type capacitif.

6. Pot (1) selon la revendication 3 où le détecteur (12) comprend un premier membre (13, 16) fixé sur l'un ou l'autre dudit couvercle (3) et dudit moyen de blocage (5) et un second membre (14, 17) fixé dans une position correspondante sur l'autre respectif dudit couvercle (3) et dudit moyen de blocage (5).

7. Pot (1) selon une ou plusieurs des revendications 1 à 6 où le dispositif de comptage (11) est associé avec un moyen d'affichage (15) pour le comptage réalisé.

8. Pot (1) selon l'une quelconque des revendications 1 à 7 incluant une cartouche filtrante qui est remplaçable quand elle est épuisée, et où le dispositif de comptage (11) est disposé pour signaler l'épuisement de la cartouche selon les cycles de remplissage dudit pot (1) par ladite ouverture (4).
